# EUROPEAN PATENT SPECIFICATION

(11) **EP 3 316 112 B1**
(45) Date of publication and mention of the grant of the patent: **11.12.2019**
(21) Application number: 17172916.3
(22) Date of filing: 25.05.2017
(51) Int. Cl.: G06F 3/0488

(54) **SPLIT SCREEN DISPLAY METHOD AND APPARATUS, COMPUTER PROGRAM AND RECORDING MEDIUM**
ANZEIGEVERFAHREN UND -VORRICHTUNG MIT GETEILTEM BILDSCHIRM, COMPUTERPROGRAMM UND AUFZEICHNUNGSMEDIUM
PROCÉDÉ D'AFFICHAGE À ÉCRAN DIVISÉ ET APPAREIL, PROGRAMME INFORMATIQUE ET SUPPORT D'ENREGISTREMENT

(30) Priority: 31.10.2016 WO PCT/CN2016/103961
(43) Date of publication of application: 02.05.2018
(73) Proprietor: Beijing Xiaomi Mobile Software Co., Ltd., Beijing 100085 (CN)
(72) Inventor: ZHU, Yin, Haidian District, Beijing 100085 (CN); LI, Jiong, Haidian District, Beijing 100085 (CN); LU, Zhenzhou, Haidian District, Beijing 100085 (CN)
(74) Representative: Sadler, Peter Frederick

(56) References cited:
- EP-A1- 3 046 018
- EP-A2- 2 741 201
- US-A1- 2011 107 272
- US-A1- 2014 351 748

## Description

### TECHNICAL FIELD

The present invention is related to the technical field of electronic devices, and more particularly to a split screen display method and apparatus, a computer program and a recording medium.

### BACKGROUND

An electronic device installed with a smart operating system allows only one application to run in foreground. That is, only one application in a running state can be displayed on a display screen of the electronic device.

When a user needs to use two applications at the same time, the user has to repeatedly switch the application that is being run in the foreground. For example, the user may need to use application A and application B at the same time. The application A is running in the foreground and the application B is running in the background. When the user needs to view the application B, the user has to first switch the application A to running in background and then switch the application B to running in foreground. When the user needs to view the application A again, the user has to switch the application A to running in foreground again. Such a manner for displaying applications on an electronic device according to the related art is too monotonous.

The terms "foreground" and "background" are well known in the field of operating systems that run applications. An application running in the foreground state is an application with which the user can interact, i.e. it accepts user input. Foreground applications may be currently displayed on the screen. A started service or activity which the user can interact with and/or see is said to be in a foreground state. The system may consider such services or activities to be something the user is actively aware of and thus not a candidate for stopping when low on memory. In contrast, an application running in the background state runs without user interaction. Some systems, such as the Android operating system, may be able to stop background processes to reclaim more memory. Different system resources may be provided to foreground and background applications.

US patent application US 2014/351748 describes a split-screen display method in which a horizontal slide signal along a touchscreen or a vertical slide signal along the touchscreen entered by using the touchscreen is obtained; a current display area of the touchscreen is divided, according to the horizontal slide signal, into at least two display windows arranged up and down, or a current display area of the touchscreen is divided, according to the vertical slide signal, into at least two display windows arranged side by side, thereby implementing that multiple application programs are simultaneously displayed on a screen up and down or side by side, and a user does not need to frequently switch between programs, which facilitates user operations. European patent application EP 3046018 describes a method of controlling a screen and an electronic device that includes a display that is functionally connected to the electronic device; and a controller that is configured to cause a display area of the display to be split into a first display area and a second display area in response to the detection of a multi-touch type split-screen input.

### SUMMARY

The present invention provides a split screen display method and apparatus, a computer program and a recording medium as follows.

According to a first aspect of the invention, there is provided a split screen display method, implemented in an electronic device that operates using a touch screen. The method comprises receiving an operation signal which triggers displaying of a multi-task management interface. The multi-task management interface is displayed, wherein the multi-task management interface displays thereon preview interfaces respectively corresponding to acquired applications running on the electronic device. The running applications may optionally be applications running in the foreground and/or the background. When it is detected that a user selects a first application and at least one second application which are running, a split screen display interface is generated based on the first application and the at least one second application. The split screen display interface is displayed, so that the first application and the at least one second application are run and displayed on the split screen display interface simultaneously. The selected applications run in split screen may be run in the foreground.

Furthermore, generating the split screen display interface based on the first application and the at least one second application, when it is detected that the user selects the first application and the at least one second application which are running, comprises: when it is detected that the user selects the first application and the at least one second application which are running, triggering generation, in the multi-task management interface, of a preview interface corresponding to the split screen display interface based on the first application and the at least one second application.

Furthermore, triggering generation, in the multi-task management interface, of the preview interface corresponding to the split screen display interface based on the first application and the at least one second application comprises: sequentially stitching or arranging the preview interface of the first application and the preview interface of the at least one second application to generate the preview interface corresponding to the split screen display interface, so that the preview interface is divided into a first display area and a second display area according to the stitching sequence of the first application and the at least one second application, wherein the first display area displays the preview interface of the first application and the second display area displays the preview interface of the at least one second application. Stitching may include arranging the display areas of the applications side by side, such that they are located close together or share a common boundary.

Optionally, displaying the split screen display interface, so that the first application and the at least one second application are run and displayed on the split screen display interface simultaneously, comprises: controlling the electronic device to run and display the split screen display interface according to a page layout of the preview interface, so that the first application is run and displayed in a first area of the split screen display interface and the at least one second application is run and displayed in a second area of the split screen display interface.

Optionally, the split screen display interface contains a multi-function virtual button which causes displaying of at least one of a split screen function exiting widget, a swapping widget and a group of switching widgets, the group of switching widgets including a first switching widget for switching the first application displayed in a first area in the split screen display interface and a second switching widget for switching the at least one second application displayed in a second area in the split screen display interface. The method further comprises: when the displayed split screen function exiting widget is triggered, controlling the split screen display interface to be exited; when the displayed swapping widget is triggered, controlling the first area and the second area in the split screen display interface to swap applications displayed therein; and switching the first application displayed in the first area to a third application when the first switching widget is triggered, and switching the at least one second application displayed in the second area to at least one fourth application when the second switching widget is triggered.

Optionally, controlling the split screen display interface to be exited comprises: controlling the electronic device to display in full screen the first application run and displayed in the first area, and controlling the at least one second application run and displayed in the second area to run in background; or controlling the electronic device to display in full screen a desktop, and controlling the first application and the at least one second application to run in background; or controlling the first application run and displayed in the first area to run in background, and controlling the electronic device to display only the at least one second application run in the second area.

According to a second aspect of the invention, there is provided a split screen display apparatus, implemented in an electronic device that operates using a touch screen and comprising: an acquiring module configured to receive an operation signal which triggers displaying of a multi-task management interface; a first displaying module configured to display the multi-task management interface, wherein the multi-task management interface displays thereon preview interfaces respectively corresponding to acquired applications running on the electronic device; a processing module configured to, when it is detected that a user selects a first application and at least one second application which are running, generate a split screen display interface based on the first application and the at least one second application; a second displaying module configured to display the split screen display interface, so that the first application and the at least one second application are run and displayed on the split screen display interface simultaneously.

Furthermore, the processing module is configured to: when it is detected that the user selects the first application and the at least one second application which are running, trigger generation, in the multi-task management interface, of a preview interface corresponding to the split screen display interface based on the first application and the at least one second application.

Furthermore, the processing module is configured to: sequentially stitch or arrange the preview interface of the first application and the preview interface of the at least one second application to generate the preview interface corresponding to the split screen display interface, so that the preview interface is divided into a first display area and a second display area according to the stitching sequence of the first application and the at least one second application, wherein the first display area displays the first application and the second display area displays the at least one second application.

Optionally, the second displaying module is configured to: control the electronic device to run and display the split screen display interface according to a page layout of the preview interface, so that the first application is run and displayed in a first area of the split screen display interface and the at least one second application is run and displayed in a second area of the split screen display interface.

Optionally, the split screen display interface contains a multi-function virtual button which causes displaying of at least one of a split screen function exiting widget, a swapping widget and a group of switching widgets, the group of switching widgets including a first switching widget for switching the first application displayed in a first area in the split screen display interface and a second switching widget for switching the at least one second application displayed in a second area in the split screen display interface. The apparatus further comprises: a first controlling module configured to, when the displayed split screen function exiting widget is triggered, control the split screen display interface to be exited; a second controlling module configured to, when the displayed swapping widget is triggered, control the first area and the second area in the split screen display interface to swap applications displayed therein; and a third controlling module configured to switch the first application displayed in the first area to a third application when the first switching widget is triggered, and to switch the at least one second application displayed in the second area to at least one fourth application when the second switching widget is triggered.

Optionally, the first controlling module comprises: a first controlling sub-module configured to control the electronic device to display in full screen the first application run and displayed in the first area, and to control the at least one second application run and displayed in the second area to run in background; or a second controlling sub-module configured to control the electronic device to display in full screen a desktop, and to control the first application and the at least one second application to run in background; or a third controlling sub-module configured to control the first application run and displayed in the first area to run in background, and to control the electronic device to display only the at least one second application run in the second area.

According to a third aspect of the invention, there is provided a split screen display apparatus, implemented in an electronic device and comprising: a processor, and a memory storing instructions executable by the processor. The processor is configured to: perform any of the methods according to the first aspect.

In one particular embodiment, the steps of the split screen display method are determined by computer program instructions.

Consequently, according to a fourth aspect, the invention is also directed to a computer program for executing the steps of the split screen display method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions according to the embodiments of this invention may have the following advantageous effects. According to the split screen methods provided by the embodiments of the invention, an operation signal which triggers displaying of a multi-task management interface is received; the multi-task management interface is displayed; when it is detected that a user selects a first application and at least one second application which are running and which are displayed on the multi-task management interface, a split screen display interface is generated; and then the first application and the at least one second application are run and displayed on the split screen display interface simultaneously. By running and displaying the first application and the second application, which are selected by the user, on the generated split screen display interface simultaneously in the foreground, the user is enabled to use at least two different applications simultaneously, thereby solving the problem in the related art that the manner for displaying applications on an electronic device is too monotonous and achieving the effect of improving user experience.

It should be understood that both the foregoing general description and the following detailed description are exemplary and explanatory only and are not restrictive of the invention. The invention is defined by the independent claims. Further aspects of the invention are outlined in the dependent claims. When the term embodiment is used for describing combinations of features falling outside the scope of the claims, the term has to be understood as referring to examples useful for understanding the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart of a split screen display method according to an exemplary embodiment.
Fig. 2A is a flowchart of a split screen display method according to another exemplary embodiment.
Fig. 2B is a schematic diagram illustrating triggering of display of a multi-task management interface according to an exemplary embodiment.
Fig. 2C is a schematic diagram of a multi-task management interface according to an exemplary embodiment.
Fig. 2D is a schematic diagram illustrating a process of generating a preview of a split screen display interface according to an exemplary embodiment.
Fig. 2E is a schematic diagram illustrating a process of generating a preview of a split screen display interface according to an exemplary embodiment.
Fig. 2F is a schematic diagram illustrating a split screen display interface according to an exemplary embodiment.
Fig. 2G is a schematic diagram illustrating a split screen display interface according to an exemplary embodiment.
Fig. 2H is a schematic diagram illustrating a state switched to when a virtual button on a split screen display interface is triggered according to an exemplary embodiment.
Fig. 2I is a schematic diagram illustrating a process of generating a preview of a split screen display interface according to an exemplary embodiment.
Fig. 2J is a schematic diagram illustrating a split screen display interface according to an exemplary embodiment.
Fig. 2K is a schematic diagram illustrating a split screen display interface according to an exemplary embodiment.
Fig. 3 is a block diagram of a split screen display apparatus according to an exemplary embodiment.
Fig. 4 is a block diagram of a split screen display apparatus according to another exemplary embodiment.
Fig. 5 is a block diagram of a split screen display apparatus according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

It can be appreciated that, while the terms "first", "second", "third" and so on may be used herein to describe various information, such information is not limited to these terms, which are only used to distinguish between different information of the same category. For example, the first information can also be referred to as the second information, and similarly the second information can also be referred to as the first information, without departing from the scope of the present invention. Depending on the context, the term "if' as used herein can be interpreted as "when", "while", or "in response to determining".

Technical solutions according to embodiments of the invention are applicable to an electronic device. The electronic device may be any kind of terminal that can be operated by touching on its touch screen. Such a terminal may be for example a touch screen terminal including a processor and a display output component, such as a smart phone, a tablet or a personal digital assistant (PDA).

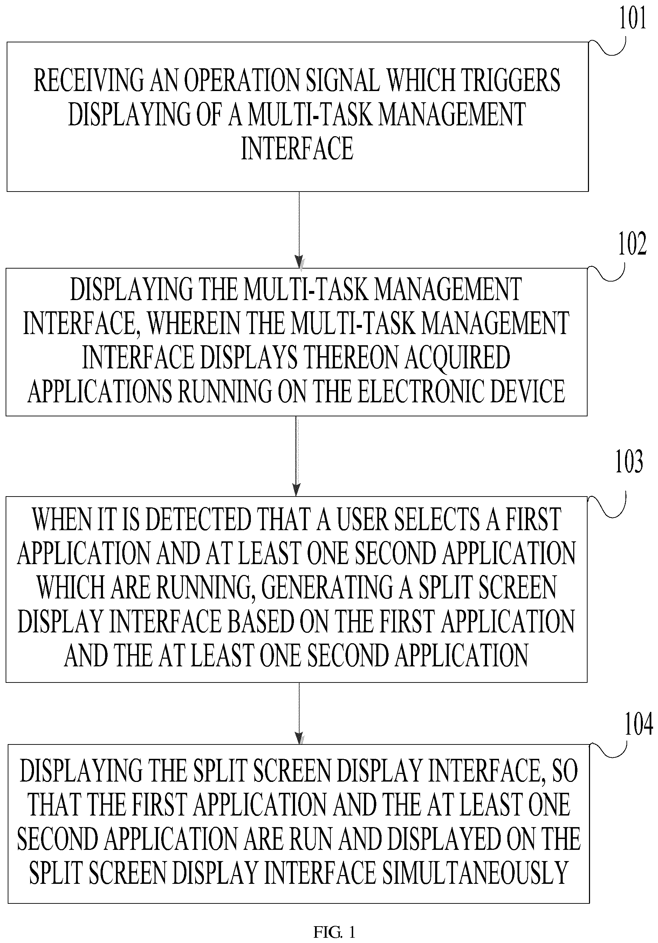

Fig. 1 is a flowchart of a split screen display method according to an exemplary embodiment. The method is used in an electronic device including a touch screen, and may comprise the following steps.

In step 101, an operation signal which triggers displaying of a multi-task management interface is received.

In step 102, the multi-task management interface is displayed, wherein the multi-task management interface displays thereon acquired applications running on the electronic device.

In step 103, when it is detected that a user selects a first application and at least one second application which are running, a split screen display interface is generated based on the first application and the at least one second application.

The user may select the first application or the second application from the applications which are running on the electronic device and which are displayed on the multi-task management interface. The electronic device will generate a split screen display interface based on the first application and the second application selected by the user. In an embodiment, when it is detected that the user selects the first application and the at least one second application which are running, generation, in the multi-task management interface, of a preview interface corresponding to the split screen display interface based on the first application and the at least one second application is triggered.

In an embodiment, triggering generation, in the multi-task management interface, of the preview interface corresponding to the split screen display interface based on the first application and the at least one second application may comprise: sequentially stitching, or arranging, the first application and the at least one second application to generate the preview interface corresponding to the split screen display interface, so that the preview interface is divided into a first display area and a second display area according to the stitching, or arrangement, sequence of the first application and the at least one second application. The first display area displays the first application and the second display area displays the at least one second application.

In step 104, the split screen display interface is displayed, so that the first application and the at least one second application are run and displayed on the split screen display interface simultaneously.

In an embodiment, displaying the split screen display interface, so that the first application and the at least one second application are run and displayed on the split screen display interface simultaneously, may comprise: controlling the electronic device to run and display the split screen display interface according to a page layout of the preview interface, so that the first application is run and displayed in a first area of the split screen display interface and the at least one second application is run and displayed in a second area of the split screen display interface.

In conclusion, according to the split screen method provided by the embodiment of the invention, an operation signal which triggers displaying of a multi-task management interface is received; the multi-task management interface is displayed; when it is detected that a user selects a first application and at least one second application which are running and which are displayed on the multi-task management interface, a split screen display interface is generated; and then the first application and the at least one second application are run and displayed on the split screen display interface simultaneously. By running and displaying the first application and the second application, which are selected by the user, on the generated split screen display interface simultaneously, the user is enabled to use at least two different applications simultaneously, thereby solving the problem in the related art that the manner for displaying applications on an electronic device is too monotonous and achieving the effect of improving user experience.

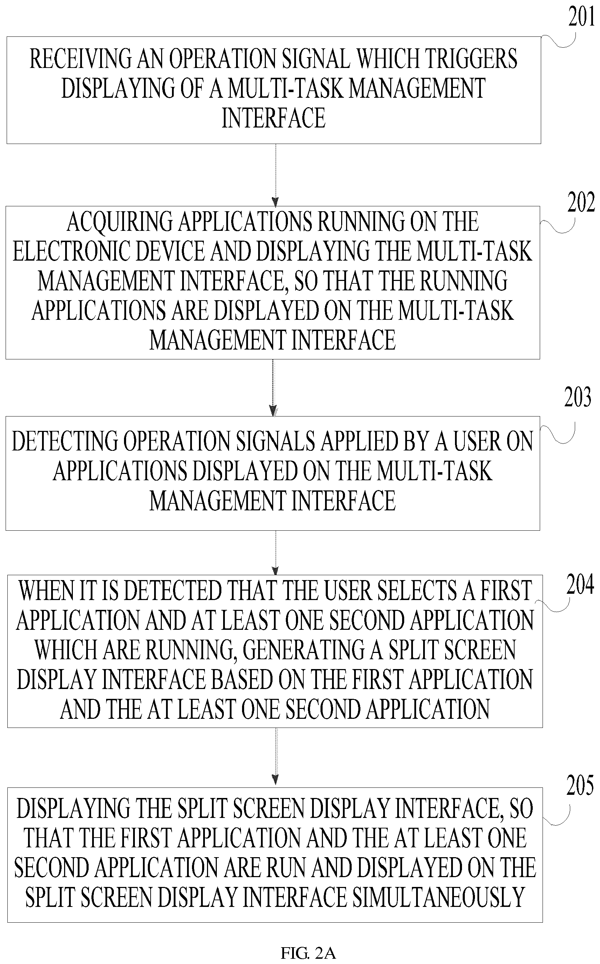

Fig. 2A is a flowchart of a split screen display method according to another exemplary embodiment. The split screen display method is implemented in an electronic device with a touch screen and comprises the following steps.

In step 201, an operation signal which triggers displaying of a multi-task management interface is received.

The operation signal referred to herein may be generated when a physical button on the electronic device is triggered, may be a gesture input by a user on the touch screen of the electronic device, or may be generated when the electronic device is moved along a predetermined trajectory while being shaken. The operation signal is not limited in the embodiment but can be determined according to actual conditions.

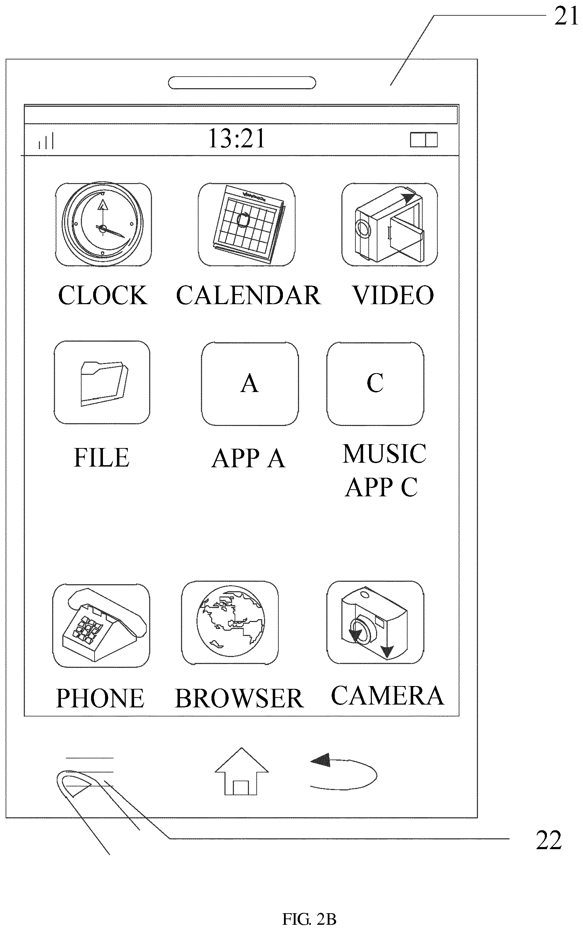

The embodiment is described by taking an example where the operation signal is generated by triggering a physical button on an electronic device. As shown in Fig. 2B, an electronic device 21 has a multi-task button 22 configured to trigger displaying of a multi-task management interface. When a user presses the multi-task button 22, the electronic device receives an operation signal which triggers displaying of a multi-task management interface.

The multi-task management interface typically displays applications which are running, and each application may be displayed in the form of its preview interface in the multi-task management interface. The preview interface referred to herein may be a page latest displayed on a display screen of the electronic device before the application exits foreground running. Optionally, the preview interface of the application may also be a home interface of the application.

In step 202, applications running on the electronic device are acquired, and the multi-task management interface is displayed so that the running applications are displayed on the multi-task management interface.

When the running applications are displayed in the multi-task management interface, each application is displayed in the form of its preview interface.

Specifically, the preview interfaces of the applications may be displayed in various arrangements. For example, the preview interfaces of the applications may be arranged horizontally in a single line according to a predetermined order for display. As another example, the preview interfaces of the applications may be arranged horizontally arranged in two lines according to a first predetermined order for display. The first predetermined order referred to herein may be an order in which the applications are opened recently or an order of frequencies at which the applications are opened, which is not limited in the embodiment but can be determined according to actual conditions.

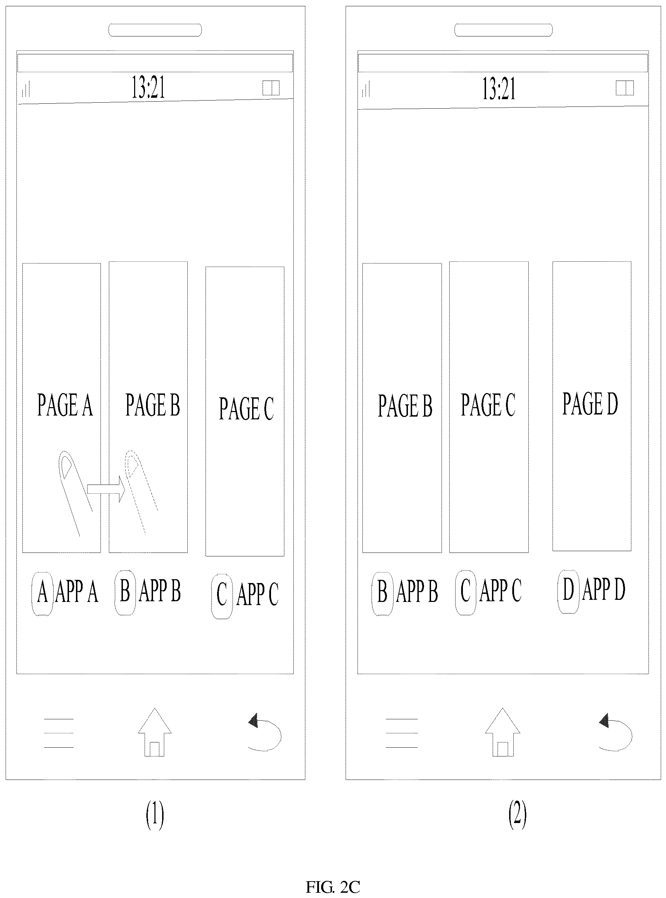

Typically, only a limited number of preview interfaces can be displayed on a display screen of an electronic device. If a user needs to view preview interfaces of more running applications, the user may trigger displaying of preview interfaces of more running applications by inputting a predetermined gesture. For example, the running applications include an application A, an application B, an application C and an application D. As shown in Fig. 2C(1), when preview interfaces of the applications are arranged in a single line for display, the application D cannot be displayed in the display screen due to limitation in size of the display screen. Then, the user may trigger displaying of a preview interface of the application D by inputting a right-to-left sliding gesture, as shown in Fig. 2C(2).

In step 203, operation signals applied by a user on applications displayed on the multi-task management interface is detected.

The operations signals referred herein are generated by the user by operating preview interfaces of applications displayed on the multi-task management interface through touching the display screen. In the embodiment, the user may move a displayed preview interface of an application by touching, slide a preview interface of an application to cancel displaying of the application on the multi-task management interface, click a function identification on a preview interface of an application to effect a corresponding operation, switching a displayed preview interface of an application on the multi-task management interface by performing a flicking gesture, and so forth.

In the embodiment of the invention, the touch screen of the electronic device supports multi-touch operations. Thus, a user can operate preview interfaces of multiple applications displayed on the multi-task management interface with multiple fingers simultaneously. For example, preview interfaces of multiple applications may be selected simultaneously and moved by performing multi-touch operations. When the user performs touch operations on displayed preview interfaces of applications, the electronic device will detect signals of the user's touch operations and analyze the same. If the touch operation signals indicate that the user selects preview interfaces of a first application and at least one second application, step 204 is executed.

In step 204, when it is detected that the user selects a first application and at least one second application which are running, a split screen display interface is generated based on the first application and the at least one second application.

In the embodiment, generating the split screen display interface based on the first application and the at least one second application may comprise: when it is detected that the user selects the first application and the at least one second application which are running, triggering generation, in the multi-task management interface, of a preview interface corresponding to the split screen display interface based on the first application and the at least one second application.

In the embodiment, triggering generation, in the multi-task management interface, of the preview interface corresponding to the split screen display interface based on the first application and the at least one second application may comprise: sequentially stitching or arranging the first application and the at least one second application to generate the preview interface corresponding to the split screen display interface, so that the preview interface is divided into a first display area and a second display area according to the stitching or arranging sequence of the first application and the at least one second application, wherein the first display area displays the first application and the second display area displays the at least one second application.

In the embodiment, when it is detected that a user selects preview interfaces of a first application and at least one second application which are running, generation, in the multi-task management interface, of a preview interface corresponding to the split screen display interface based on the selected preview interfaces of the first application and the at least one second application will be triggered. Then, operation signals applied by the user on the preview interfaces of the first application and the second application are detected. If it is detected that the user moves the preview interfaces of the first application and the second application to stitch them together, a stitched-together interface which is a preview of the split screen display interface is generated according to a stitching sequence of these two preview interfaces. Taking the stitching line of the preview interfaces of the first application and the second application as a dividing line, the preview of the split screen display interface is divided into two areas, which are referred to as a first display area and a second display area in the embodiment. The first display area displays the preview interface of the first application, and the second display area displays the preview interface of the second application.

In the embodiment, the preview interfaces of the first application and the second application may be stitched together by operating, with two fingers simultaneously, two selected preview interfaces of applications to move them towards each other so that they are stitched together or by operating one of two selected preview interfaces of applications to move it towards the other one so that the two selected preview interfaces of applications are stitched together.

When there is one second application, there is one second display area for displaying the second application. When there are multiple second applications, there are multiple corresponding second display areas for respectively displaying the second applications. The second display area is divided along the stitching line of preview interfaces of the second applications.

The user may generate, by stitching, the preview of the split screen display interface in the multi-task management interface, so that the user can design the split screen display interface before the electronic device displays the split screen display interface.

In the embodiment, the user may stitch together the preview interfaces of the first application and the second application in an upper-lower arrangement or in a left-right arrangement.

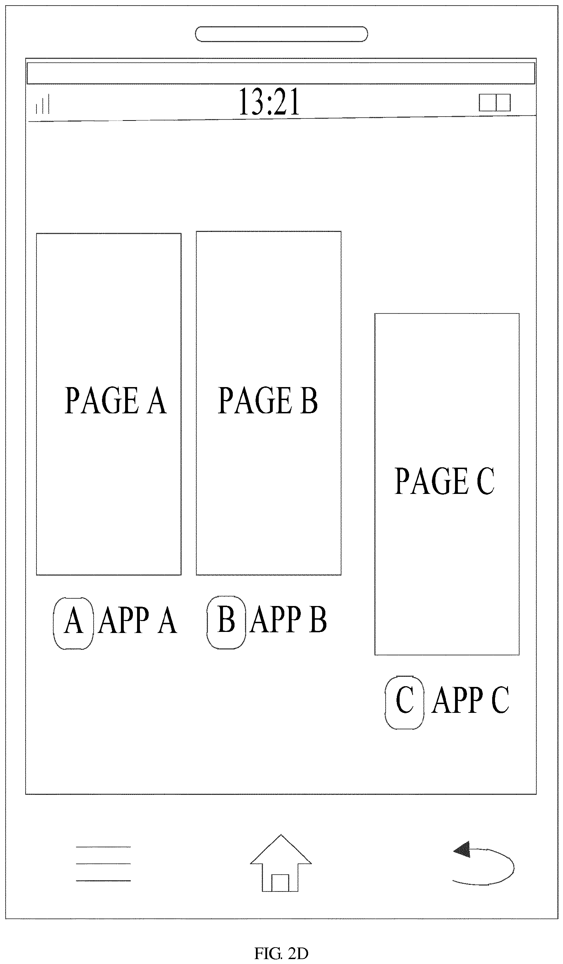

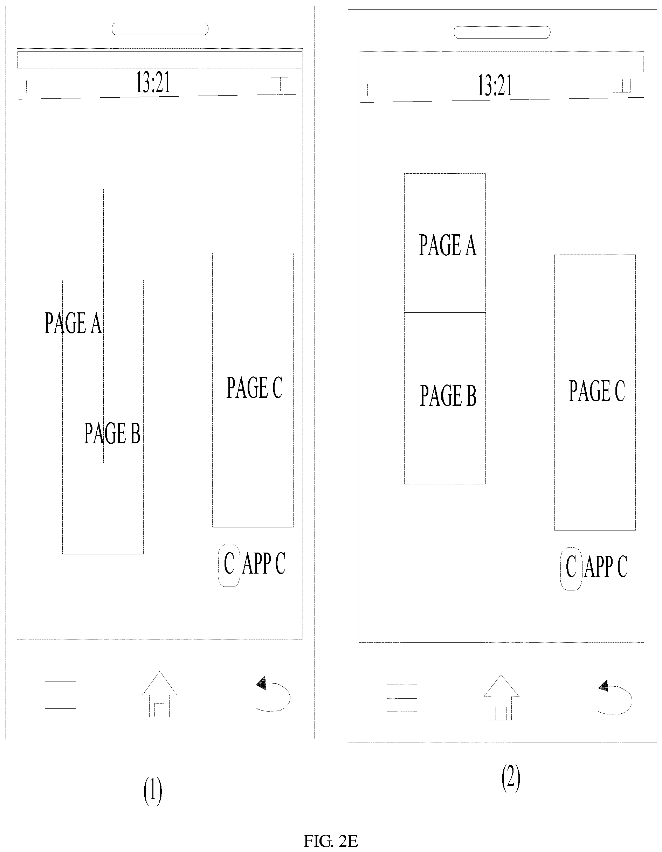

Figs. 2D and 2E schematically illustrates a process for generating a preview of a split screen display interface according to an embodiment. As shown in Fig. 2D, a user selects preview interfaces of an application A and an application B by performing multi-touch operations in a multi-task management interface. The preview interfaces of the application A and the application B are highlighted. Afterwards, by dragging these two preview interfaces, the user may stitch them together according to a desired order. For example, the preview interfaces of the application A and the application B may be stitched together in an upper-lower arrangement, as shown in Figs. 2E(1) and 2E(2), to generate a preview of a split screen display interface.

In step 205, the split screen display interface is displayed, so that the first application and the at least one second application are run and displayed on the split screen display interface simultaneously.

In the embodiment, displaying the split screen display interface, so that the first application and the at least one second application are run and displayed on the split screen display interface simultaneously, may comprise: controlling the electronic device to run and display the split screen display interface according to a page layout of the preview interface, so that the first application is run and displayed in a first area of the split screen display interface and the at least one second application is run and displayed in a second area of the split screen display interface. As such, the user can operate multiple applications simultaneously on the split screen display interface.

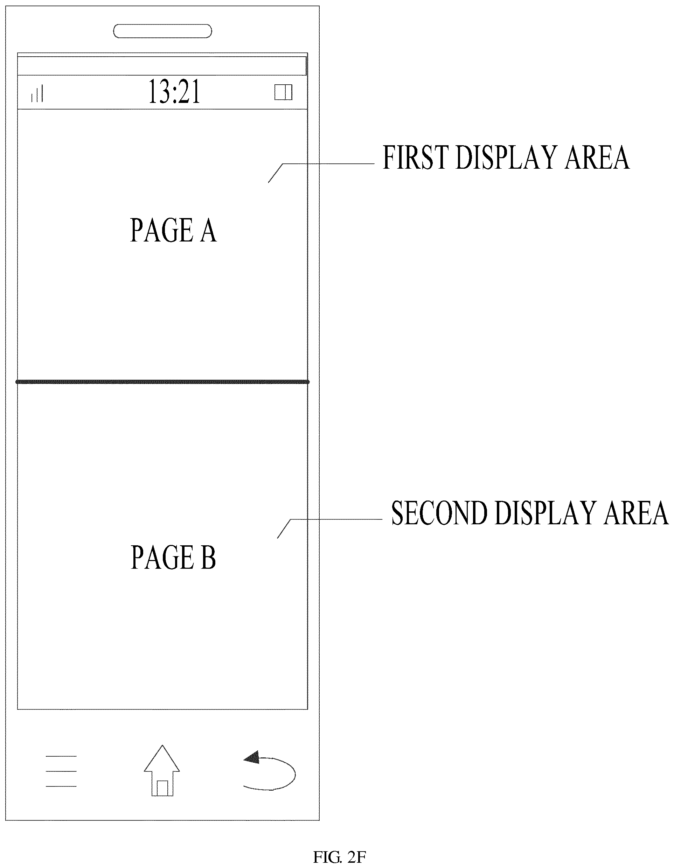

Fig. 2F is a schematic diagram of a split screen display interface. The electronic device displays the generated split screen display interface, according to the preview of the split screen display interface generated by the user by stitching as shown in Fig. 2E(2). The split screen display interface is divided into a first display area for running and displaying the application A and a second display area for running and displaying the application B. As such, the user can operate the application A and the application B simultaneously on the split screen interface.

In the embodiment, the split screen display interface may be provided with a multi-function virtual button which causes displaying of at least one of a split screen function exiting widget, a swapping widget and a group of switching widgets.

When the displayed split screen function exiting widget is triggered, the split screen display interface is controlled to be exited.

When the displayed swapping widget is triggered, the first area and the second area in the split screen display interface are controlled to swap applications displayed therein.

The group of switching widgets includes a first switching widget for switching the first application displayed in a first area in the split screen display interface and a second switching widget for switching the at least one second application displayed in a second area in the split screen display interface. The first application displayed in the first area is switched to a third application when the first switching widget is triggered, and the at least one second application displayed in the second area is switched to at least one fourth application when the second switching widget is triggered. In an embodiment, when the first switching widget is triggered, the multi-task management interface is displayed. On the displayed multi-task management interface, a third application is selected. When the third application is selected, the user is prompted whether to switch the third application to displaying in foreground. If the user chooses to switch the third application to displaying in foreground, then the first application displayed in the first display area is switched to the third application for display. Likewise, when the second switching widget is triggered, the multi-task management interface is displayed. On the displayed multi-task management interface, at least one fourth application is selected. When the fourth application is selected, the user is prompted whether to switch the fourth application to displaying in foreground. If the user chooses to switch the fourth application to displaying in foreground, then the second application displayed in the second display area is switched to the fourth application for display.

In an embodiment, controlling the split screen display interface to be exited may comprise: controlling the electronic device to display in full screen the first application run and displayed in the first area, and controlling the at least one second application run and displayed in the second area to run in background; or controlling the electronic device to display in full screen a desktop, and controlling the first application and the at least one second application to run in background; or controlling the first application run and displayed in the first area to run in background, and controlling the electronic device to display only the at least one second application run in the second area.

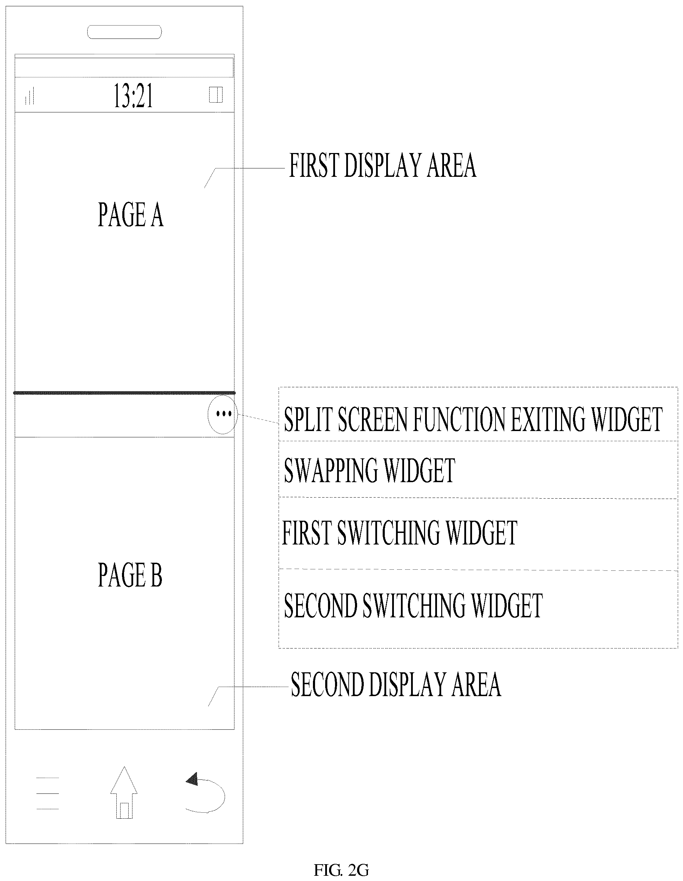

Fig. 2G is a schematic diagram illustrating a split screen display interface. As shown, the split screen display interface is provided with a multi-function virtual button. When the multi-function virtual button is triggered, at least one of a split screen function exiting widget, a swapping widget and a group of switching widgets is displayed. Herein, the switching widgets include a first switching widget and a second switching widget.

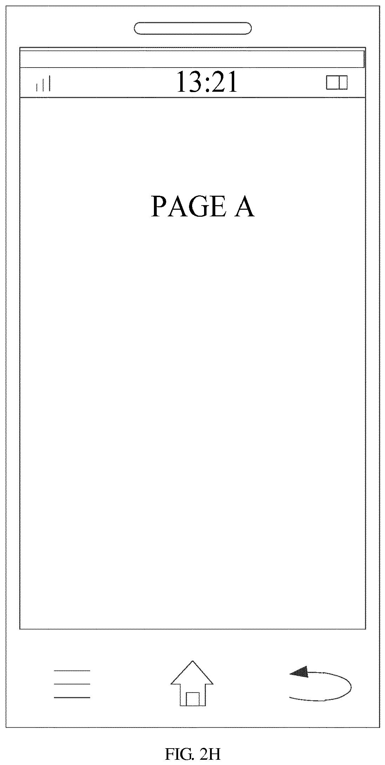

Fig. 2H is a schematic diagram illustrating a state switched to when a virtual button on a split screen display interface is triggered. When the split screen function exiting widget shown in Fig. 2G is triggered, the electronic device is controlled to display in full screen an application A run and displayed in the first area, and an application B run and displayed in the second area is controlled to run in background. The display interface shown in Fig. 2G is switched to that shown in Fig. 2H.

In another embodiment, when the split screen function exiting widget shown in Fig. 2G is triggered, the electronic device is controlled to display in full screen a desktop and the applications A and B are controlled to run in background so that the desktop shown in Fig. 2B is displayed. Afterwards, the user may trigger displaying of the multi-task management interface again, to select multiple applications to be displayed in a split screen display manner.

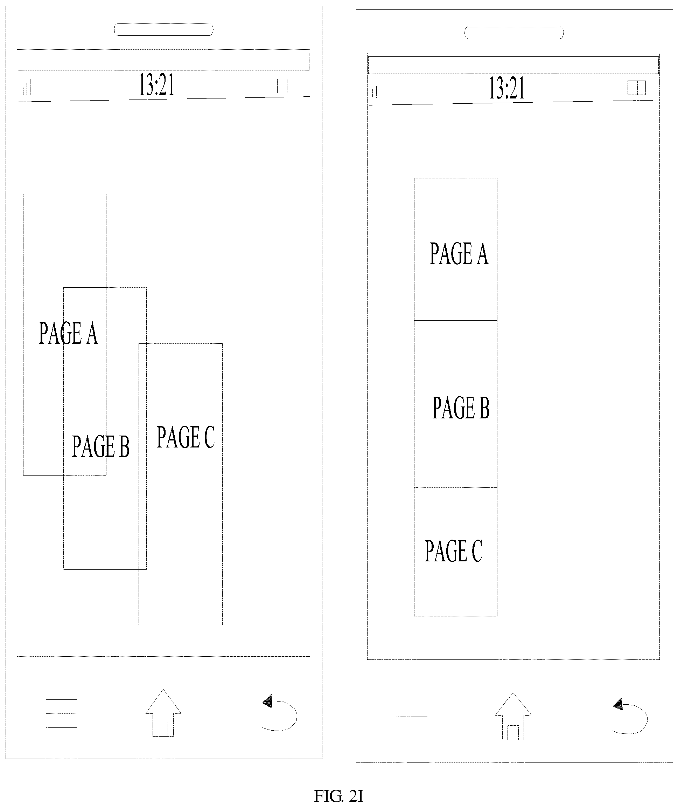

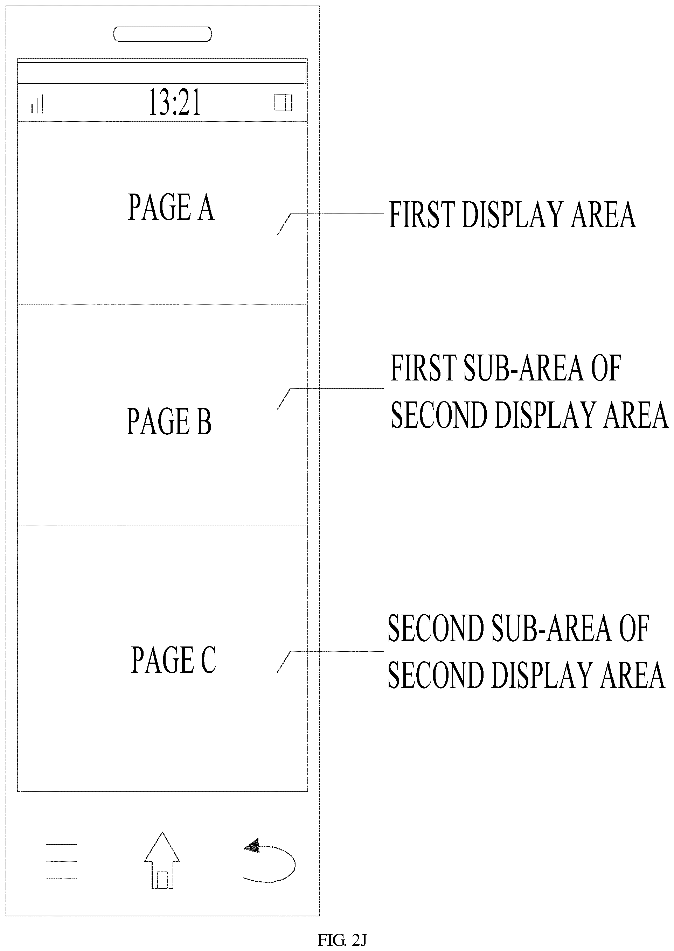

In another application scenario, when the user triggers displaying of the multi-task management interface shown in Fig. 2C and selects preview interfaces of the applications A, B and C, the preview interfaces of the applications A, B and C are stitched together to generate a preview image of a split screen display interface as shown in Fig. 2I. After the preview image of the split screen display interface is generated, the user will be prompted whether to display the split screen display interface. If the user confirms displaying of the split screen display interface, then the split screen display interface is displayed. As shown in Fig. 2J, the application A is displayed in a first display area, and the applications B and C are displayed in a second display area. The second display area is divided into a first sub-area for displaying the application B and a second sub-area for displaying the application C.

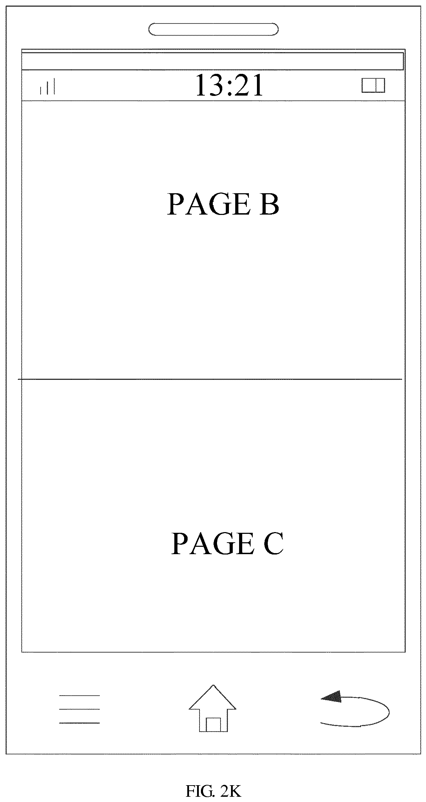

If the user triggers the multi-function virtual button provided on the split screen display interface, at least one of a split screen function exiting widget, a swapping widget and a group of switching widgets is displayed. If the user selects the split screen function exiting widget, the application A run and displayed in the first area is controlled to run in background, and the electronic device is controlled to display the applications B and C run in the second area, as shown in Fig. 2K.

In conclusion, according to the split screen method provided by the embodiment of the invention, an operation signal which triggers displaying of a multi-task management interface is received; the multi-task management interface is displayed; when it is detected that a user selects a first application and at least one second application which are running and which are displayed on the multi-task management interface, a split screen display interface is generated; and then the first application and the at least one second application are run and displayed on the split screen display interface simultaneously. By running and displaying the first application and the second application, which are selected by the user, on the generated split screen display interface simultaneously, the user is enabled to use at least two different applications simultaneously, thereby solving the problem in the related art that the manner for displaying applications on an electronic device is too monotonous and achieving the effect of improving user experience.

In the following, apparatus embodiments which can perform the method embodiments of the invention will be described. For details of the apparatus embodiments not disclosed herein, reference can be made to the method embodiments of the invention.

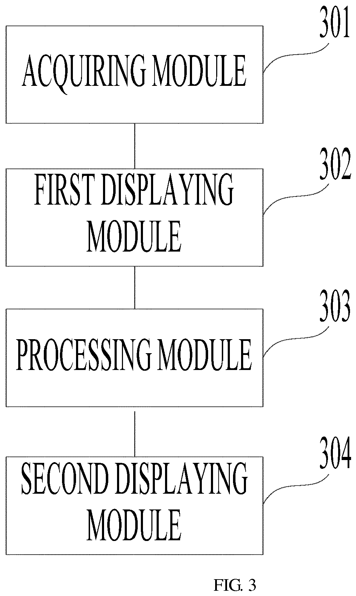

Fig. 3 is a block diagram of a split screen display apparatus according to an exemplary embodiment. The split screen display apparatus is implemented in an electronic device having a touch screen and may comprise an acquiring module 301, a first displaying module 302, a processing module 303 and a second displaying module 304.

The acquiring module 301 may be configured to receive an operation signal which triggers displaying of a multi-task management interface.

The first displaying module 302 may be configured to display the multi-task management interface, wherein the multi-task management interface displays thereon acquired applications running on the electronic device.

The processing module 303 may be configured to, when it is detected that a user selects a first application and at least one second application which are running, generate a split screen display interface based on the first application and the at least one second application.

The second displaying module 304 may be configured to display the split screen display interface, so that the first application and the at least one second application are run and displayed on the split screen display interface simultaneously.

In conclusion, according to the split screen apparatus provided by the embodiment of the invention, an operation signal which triggers displaying of a multi-task management interface is received; the multi-task management interface is displayed; when it is detected that a user selects a first application and at least one second application which are running and which are displayed on the multi-task management interface, a split screen display interface is generated; and then the first application and the at least one second application are run and displayed on the split screen display interface simultaneously. By running and displaying the first application and the second application, which are selected by the user, on the generated split screen display interface simultaneously, the user is enabled to use at least two different applications simultaneously, thereby solving the problem in the related art that the manner for displaying applications on an electronic device is too monotonous and achieving the effect of improving user experience.

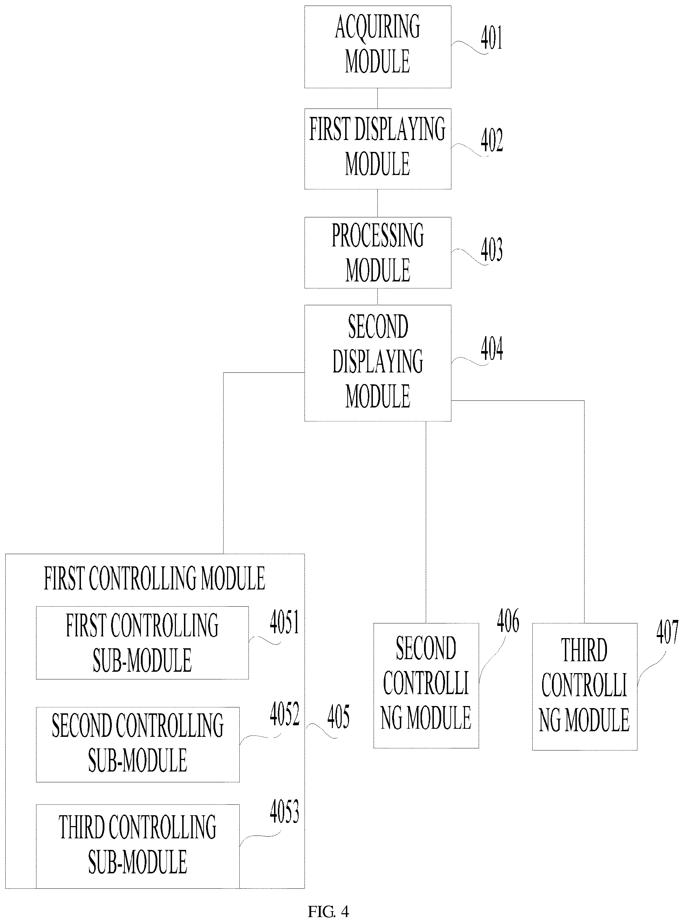

Fig. 4 is a block diagram of a split screen display apparatus according to another exemplary embodiment. The split screen display apparatus is implemented in an electronic device having a touch screen and may comprise an acquiring module 401, a first displaying module 402, a processing module 403 and a second displaying module 404.

The acquiring module 401 may be configured to receive an operation signal which triggers displaying of a multi-task management interface.

The operation signal referred to herein may be generated when a physical button on the electronic device is triggered, may be a gesture input by a user on the touch screen of the electronic device, or may be generated when the electronic device is moved along a predetermined trajectory while being shaken. The operation signal is not limited in the embodiment but can be determined according to actual conditions.

The multi-task management interface typically displays applications which are running, and each application may be displayed in the form of its preview interface in the multi-task management interface. The preview interface referred to herein may be a page latest displayed on a display screen of the electronic device before the application exits foreground running. Optionally, the preview interface of the application may also be a home interface of the application.

The first displaying module 402 may be configured to display the multi-task management interface, wherein the multi-task management interface displays thereon acquired applications running on the electronic device.

The processing module 403 may be configured to, when it is detected that a user selects a first application and at least one second application which are running, generate a split screen display interface based on the first application and the at least one second application.

The second displaying module 404 may be configured to display the split screen display interface, so that the first application and the at least one second application are run and displayed on the split screen display interface simultaneously.

In this embodiment, the processing module 403 may be configured to: when it is detected that the user selects the first application and the at least one second application which are running, trigger generation, in the multi-task management interface, of a preview interface corresponding to the split screen display interface based on the first application and the at least one second application.

In the embodiment, the processing module 403 may be configured to: sequentially stitch the first application and the at least one second application to generate the preview interface corresponding to the split screen display interface, so that the preview interface is divided into a first display area and a second display area according to the stitching sequence of the first application and the at least one second application, wherein the first display area displays the first application and the second display area displays the at least one second application.

In the embodiment, the second displaying module 404 is configured to: control the electronic device to run and display the split screen display interface according to a page layout of the preview interface, so that the first application is run and displayed in a first area of the split screen display interface and the at least one second application is run and displayed in a second area of the split screen display interface.

In the embodiment, the split screen display interface contains a multi-function virtual button which causes displaying of at least one of a split screen function exiting widget, a swapping widget and a group of switching widgets. The group of switching widgets includes a first switching widget for switching the first application displayed in a first area in the split screen display interface and a second switching widget for switching the at least one second application displayed in a second area in the split screen display interface.

The apparatus may further comprise: a first controlling module 405, a second controlling module 406 and a third controlling module 407. The first controlling module 405 may be configured to, when the displayed split screen function exiting widget is triggered, control the split screen display interface to be exited. The second controlling module 406 may be configured to, when the displayed swapping widget is triggered, control the first area and the second area in the split screen display interface to swap applications displayed therein. The third controlling module 407 may be configured to switch the first application displayed in the first area to a third application when the first switching widget is triggered, and to switch the at least one second application displayed in the second area to at least one fourth application when the second switching widget is triggered.

In the embodiment, the first controlling module 405 may comprise: a first controlling sub-module 4051, a second controlling sub-module 4052 or a third controlling sub-module 4053.

The first controlling sub-module 4051 may be configured to control the electronic device to display in full screen the first application run and displayed in the first area, and to control the at least one second application run and displayed in the second area to run in background.

The second controlling sub-module 4052 may be configured to control the electronic device to display in full screen a desktop, and to control the first application and the at least one second application to run in background.

The third controlling sub-module 4053 may be configured to control the first application run and displayed in the first area to run in background, and to control the electronic device to display only the at least one second application run in the second area.

In conclusion, according to the split screen apparatus provided by the embodiment of the invention, an operation signal which triggers displaying of a multi-task management interface is received; the multi-task management interface is displayed; when it is detected that a user selects a first application and at least one second application which are running and which are displayed on the multi-task management interface, a split screen display interface is generated; and then the first application and the at least one second application are run and displayed on the split screen display interface simultaneously. By running and displaying the first application and the second application, which are selected by the user, on the generated split screen display interface simultaneously, the user is enabled to use at least two different applications simultaneously, thereby solving the problem in the related art that the manner for displaying applications on an electronic device is too monotonous and achieving the effect of improving user experience.

An exemplary embodiment of the invention provides a split screen display apparatus which can perform the split screen display method of the invention. The split screen display apparatus comprises: a processor, and a memory storing instructions executable by the processor.

The processor is configured to: receive an operation signal which triggers displaying of a multi-task management interface; display the multi-task management interface, wherein the multi-task management interface displays thereon acquired applications running on the electronic device; and when it is detected that a user selects a first application and at least one second application which are running, generate a split screen display interface based on the first application and the at least one second application; and display the split screen display interface, so that the first application and the at least one second application are run and displayed on the split screen display interface simultaneously.

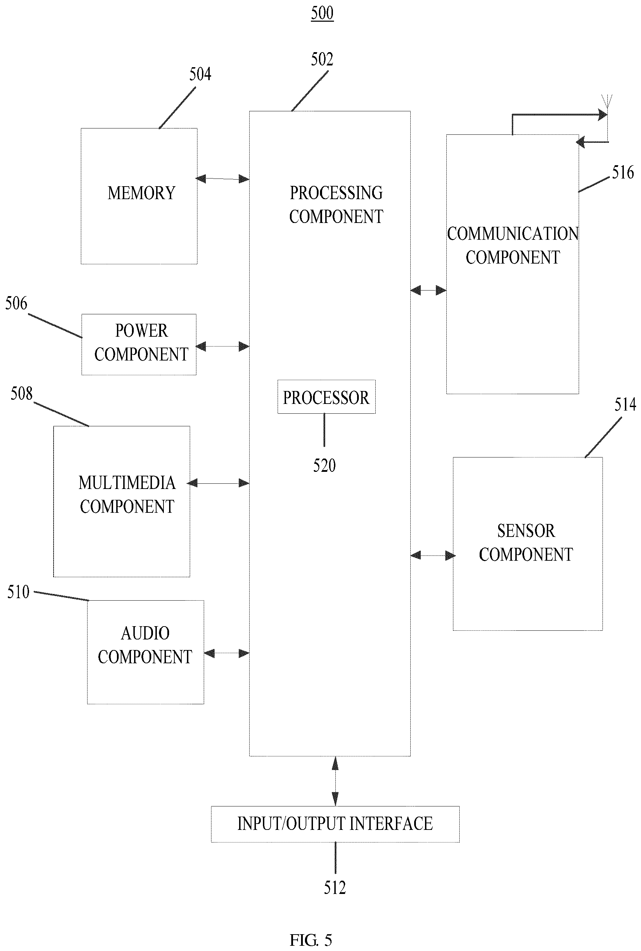

Fig. 5 is a block diagram of a split screen display apparatus 500 according to an exemplary embodiment. For example, the apparatus 500 may be a mobile phone, a computer, a digital broadcast terminal, a messaging device, a gaming console, a tablet device, a medical device, exercise equipment, a personal digital assistant or the like.

Referring to Fig. 5, the apparatus 500 may comprise one or more of the following components: a processing component 502, a memory 504, a power component 506, a multimedia component 508, an audio component 510, an input/output (I/O) interface 512, a sensor component 514 and a communication component 516.

The processing component 502 typically controls overall operations of the apparatus 500, such as the operations associated with display, telephone calls, data communications, camera operations and recording operations. The processing component 502 may include one or more processors 520 to execute instructions to perform all or some of the steps in the above described methods. Moreover, the processing component 502 may include one or more modules which facilitate the interaction between the processing component 502 and other components. For example, the processing component 502 may comprise a multimedia module to facilitate the interaction between the multimedia component 508 and the processing component 502.

The memory 504 is configured to store various types of data to support the operation of the apparatus 500. Examples of such data comprise instructions for any applications or methods operated on the apparatus 500, various kinds of data, messages, pictures, video, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may comprise a power management system, one or more power sources, and any other components associated with the generation, management, and distribution of power in the apparatus 500.

The multimedia component 508 comprises a screen providing an output interface between the apparatus 500 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 comprises one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, presence or absence of user's contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one embodiment, the communication component 516 receives a broadcast signal or broadcast associated information from an external broadcast management system via a broadcast channel. In one embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an embodiment, there is also provided a non-transitory computer-readable storage medium comprising instructions, such as comprised in the memory 504, executable by the processor 520 in the apparatus 500, for performing the above-described split screen display methods. For example, the non-transitory computer-readable storage medium may be a ROM, a RAM, a CD-ROM, a magnetic tape, a floppy disc, an optical data storage device or the like.

The non-transitory computer-readable storage medium has stored therein instructions that, when executed by a processor of the apparatus 500, cause the apparatus 500 to perform the methods shown in Figs. 1, 2A and 2G.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A split screen display method, implemented in an electronic device that operates using a touch screen and comprising:
receiving (101, 201) an operation signal which triggers displaying of a multi-task management interface;
displaying (102) the multi-task management interface, wherein the multi-task management interface displays thereon preview interfaces respectively corresponding to acquired applications running on the electronic device;
when it is detected that a user selects, from the multi-task management interface display, a first application and at least one second application which are running, generating (103) a split screen display interface based on the first application and the at least one second application;
displaying (104) the split screen display interface, so that the first application and the at least one second application are run and displayed on the split screen display interface simultaneously; wherein generating (103) the split screen display interface based on the first application and the at least one second application, when it is detected that the user selects the first application and the at least one second application which are running, comprises:
when it is detected that the user selects the first application and the at least one second application which are running, triggering (204) generation, in the multi-task management interface, of a preview interface corresponding to the split screen display interface based on the first application and the at least one second application; and wherein triggering (204) generation, in the multi-task management interface, of the preview interface corresponding to the split screen display interface based on the first application and the at least one second application comprises:
sequentially stitching the preview interface of the first application and the preview interface of the at least one second application to generate the preview interface corresponding to the split screen display interface, so that the preview interface is divided into a first display area and a second display area according to the stitching sequence of the first application and the at least one second application, wherein the first display area displays the preview interface of the first application and the second display area displays the preview interface of the at least one second application.

2. The method of any preceding claim, wherein displaying (104) the split screen display interface, so that the first application and the at least one second application are run and displayed on the split screen display interface simultaneously, comprises:
controlling the electronic device to run and display the split screen display interface according to a page layout of the preview interface, so that the first application is run and displayed in a first area of the split screen display interface and the at least one second application is run and displayed in a second area of the split screen display interface.

3. The method of any of claims 1 or 2, wherein
the split screen display interface contains a multi-function virtual button which causes displaying of at least one of a split screen function exiting widget, a swapping widget and a group of switching widgets, the group of switching widgets including a first switching widget for switching the first application displayed in a first area in the split screen display interface and a second switching widget for switching the at least one second application displayed in a second area in the split screen display interface, and
the method further comprises:
when the displayed split screen function exiting widget is triggered, controlling the split screen display interface to be exited;
when the displayed swapping widget is triggered, controlling the first area and the second area in the split screen display interface to swap applications displayed therein; and/or
switching the first application displayed in the first area to a third application when the first switching widget is triggered, and switching the at least one second application displayed in the second area to at least one fourth application when the second switching widget is triggered.

4. The method of claim 3, wherein controlling the split screen display interface to be exited comprises:
controlling the electronic device to display in full screen the first application run and displayed in the first area, and controlling the at least one second application run and displayed in the second area to run in background; or
controlling the electronic device to display in full screen a desktop or home screen, and controlling the first application and the at least one second application to run in background; or
controlling the first application run and displayed in the first area to run in background, and controlling the electronic device to display only the at least one second application run in the second area.

5. A split screen display apparatus, implemented in an electronic device that operates using a touch screen and comprising:
an acquiring module (301) configured to receive an operation signal which triggers displaying of a multi-task management interface;
a first displaying module (302) configured to display the multi-task management interface, wherein the multi-task management interface displays thereon preview interfaces respectively corresponding to acquired applications running on the electronic device;
a processing module (303) configured to, when it is detected that a user selects, from the multi-task management interface display, a first application and at least one second application which are running, generate a split screen display interface based on the first application and the at least one second application; and
a second displaying module (304) configured to display the split screen display interface, so that the first application and the at least one second application are run and displayed on the split screen display interface simultaneously; wherein the processing module (303) is configured to:
when it is detected that the user selects the first application and the at least one second application which are running, trigger generation, in the multi-task management interface, of a preview interface corresponding to the split screen display interface based on the first application and the at least one second application; and wherein the processing module (303) is configured to:
sequentially stitch the preview interface of the first application and the preview interface of the at least one second application to generate the preview interface corresponding to the split screen display interface, so that the preview interface is divided into a first display area and a second display area according to the stitching sequence of the first application and the at least one second application, wherein the first display area displays the preview interface of the first application and the second display area displays the preview interface of the at least one second application.

6. The apparatus of claim 5, wherein the second displaying module (304) is configured to:
control the electronic device to run and display the split screen display interface according to a page layout of the preview interface, so that the first application is run and displayed in a first area of the split screen display interface and the at least one second application is run and displayed in a second area of the split screen display interface.

7. The apparatus of any of claims 5 or 6, wherein
the split screen display interface contains a multi-function virtual button which causes displaying of at least one of a split screen function exiting widget, a swapping widget and a group of switching widgets, the group of switching widgets including a first switching widget for switching the first application displayed in a first area in the split screen display interface and a second switching widget for switching the at least one second application displayed in a second area in the split screen display interface, and
the apparatus further comprises:
a first controlling module (405) configured to, when the displayed split screen function exiting widget is triggered, control the split screen display interface to be exited;
a second controlling module (406) configured to, when the displayed swapping widget is triggered, control the first area and the second area in the split screen display interface to swap applications displayed therein; and/or
a third controlling module (407) configured to switch the first application displayed in the first area to a third application when the first switching widget is triggered, and to switch the at least one second application displayed in the second area to at least one fourth application when the second switching widget is triggered.

8. The apparatus of claim 7, wherein the first controlling module (405) comprises:
a first controlling sub-module (4051) configured to control the electronic device to display in full screen the first application run and displayed in the first area, and to control the at least one second application run and displayed in the second area to run in background; or
a second controlling sub-module (4052) configured to control the electronic device to display in full screen a desktop or home screen, and to control the first application and the at least one second application to run in background; or
a third controlling sub-module (4053) configured to control the first application run and displayed in the first area to run in background, and to control the electronic device to display only the at least one second application run in the second area.

9. A computer program including instructions for executing the steps of a split screen display method according to any of claims 1 to 4 when said program is executed by a computer.

10. A recording medium readable by a computer and having recorded thereon a computer program including instructions for executing the steps of a split screen display method according to any of claims 1 to 4.

## Patentansprüche

1. Bildschirmaufteilungs-Anzeigeverfahren, das in einer elektronischen Vorrichtung implementiert wird, die unter Verwendung eines Berührungsbildschirms betrieben wird, und Folgendes aufweist:
Empfangen (101, 201) eines Betriebssignals, das das Anzeigen einer Mehrprozess-Managementschnittstelle auslöst;
Anzeigen (102) der Mehrprozess-Managementschnittstelle, wobei die Mehrprozess-Managementschnittstelle darauf Vorschauoberflächen anzeigt, die jeweils erworbenen Anwendungen entsprechen, die auf der elektronischen Vorrichtung ausgeführt werden;
wenn erkannt wird, dass ein Benutzer eine erste Anwendung und wenigstens eine zweite Anwendung aus der Mehrprozess-Managementschnittstellenanzeige, die ausgeführt werden, auswählt, Erzeugen (103) einer Bildschirmaufteilungs-Anzeigeschnittstelle auf Basis der ersten Anwendung und der wenigstens einen zweiten Anwendung;
Anzeigen (104) der Bildschirmaufteilungs-Anzeigeschnittstelle, so dass die erste Anwendung und die wenigstens eine zweite Anwendung gleichzeitig ausgeführt und auf der Bildschirmaufteilungs-Anzeigeschnittstelle angezeigt werden; wobei das Erzeugen (103) der Bildschirmaufteilungs-Anzeigeschnittstelle auf Basis der ersten Anwendung und der wenigstens einen zweiten Anwendung Folgendes aufweist, wenn erkannt wird, dass der Benutzer die erste Anwendung und die wenigstens eine zweite Anwendung, die ausgeführt werden, auswählt:
wenn erkannt wird, dass der Benutzer die erste Anwendung und die wenigstens eine zweite Anwendung, die ausgeführt werden, auswählt, Auslösen (204) der Erzeugung einer Vorschauoberfläche in der Mehrprozess-Managementschnittstelle, die der Bildschirmaufteilungs-Anzeigeschnittstelle entspricht, auf Basis der ersten Anwendung und der wenigstens einen zweiten Anwendung; und wobei das Auslösen (204) der Erzeugung der Vorschauoberfläche in der Mehrprozess-Managementschnittstelle, die der Bildschirmaufteilungs-Anzeigeschnittstelle entspricht, auf Basis der ersten Anwendung und der wenigstens einen zweiten Anwendung Folgendes aufweist:
sequentielles Stitching der Vorschauoberfläche der ersten Anwendung und der Vorschauoberfläche der wenigstens einen zweiten Anwendung zum Erzeugen der Vorschauoberfläche, die der Bildschirmaufteilungs-Anzeigeschnittstelle entspricht, so dass die Vorschauoberfläche in einen ersten Anzeigebereich und einen zweiten Anzeigebereich gemäß der Stitching-Sequenz der ersten Anwendung und der wenigstens einen zweiten Anwendung unterteilt wird, wobei der erste Anzeigebereich die Vorschauoberfläche der ersten Anwendung anzeigt und der zweite Anwendungsbereich die Vorschauoberfläche der wenigstens einen zweiten Anwendung anzeigt.

2. Verfahren nach einem der vorhergehenden Ansprüche, wobei das Anzeigen (104) der Bildschirmaufteilungs-Anzeigeschnittstelle, so dass die erste Anwendung und die wenigstens eine zweite Anwendung gleichzeitig ausgeführt und auf der Bildschirmaufteilungs-Anzeigeschnittstelle angezeigt werden, Folgendes aufweist:
Steuern der elektronischen Vorrichtung, so dass die Bildschirmaufteilungs-Anzeigeschnittstelle gemäß einer Seitengestaltung der Vorschauoberfläche ausgeführt und angezeigt wird, so dass die erste Anwendung in einem ersten Bereich der Bildschirmaufteilungs-Anzeigeschnittstelle ausgeführt und angezeigt wird und die wenigstens eine zweite Anwendung in einem zweiten Bereich der Bildschirmaufteilungs-Anzeigeschnittstelle ausgeführt und angezeigt wird.

3. Verfahren nach einem der Ansprüche 1 oder 2, wobei
die Bildschirmaufteilungs-Anzeigeschnittstelle eine virtuelle Mehrfunktionsschaltfläche enthält, die das Anzeigen von wenigstens einem von einem Steuerelement zum Beenden der Bildschirmaufteilungsfunktion, einem Tausch-Steuerelement und einer Gruppe von Umschaltsteuerelementen veranlasst, wobei die Gruppe von Umschaltsteuerelementen ein erstes Umschaltsteuerelement zum Umschalten der ersten Anwendung, die in einem ersten Bereich in der Bildschirmaufteilungs-Anzeigeschnittstelle angezeigt wird, und ein zweites Umschaltsteuerelement zum Umschalten der wenigstens einen zweiten Anwendung, die in einem zweiten Bereich in der Bildschirmaufteilungs-Anzeigeschnittstelle angezeigt wird, enthält und
wobei das Verfahren ferner Folgendes aufweist:
wenn das angezeigte Steuerelement zum Beenden der Bildschirmaufteilungsfunktion ausgelöst wird, Steuern der Bildschirmaufteilungs-Anzeigeschnittstelle, so dass sie beendet wird;
wenn das angezeigte Tausch-Steuerelement ausgelöst wird, Steuern des ersten Bereichs und des zweiten Bereichs in der Bildschirmaufteilungs-Anzeigeschnittstelle, so dass darin angezeigte Anwendungen vertauscht werden; und/oder
Umschalten der ersten Anwendung, die im ersten Bereich angezeigt wird, auf eine dritte Anwendung, wenn das erste Umschaltsteuerelement ausgelöst wird, und Umschalten der wenigstens einen zweiten Anwendung, die im zweiten Bereich angezeigt wird, auf wenigstens eine vierte Anwendung, wenn das zweite Umschaltsteuerelement ausgelöst wird.

4. Verfahren nach Anspruch 3, wobei das Steuern der Bildschirmaufteilungs-Anzeigeschnittstelle, so dass sie beendet wird, Folgendes aufweist:
Steuern der elektronischen Vorrichtung, so dass sie die erste Anwendung, die im ersten Bereich ausgeführt und angezeigt wird, im Vollbildmodus anzeigt, und Steuern der wenigstens einen zweiten Anwendung, die im zweiten Bereich ausgeführt und angezeigt wird, so dass sie im Hintergrund ausgeführt wird; oder
Steuern der elektronischen Vorrichtung, so dass ein Desktop- oder Hauptbildschirm im Vollbildmodus angezeigt wird, und Steuern der ersten Anwendung und der wenigstens einen zweiten Anwendung, so dass sie im Hintergrund ausgeführt wird; oder
Steuern der ersten Anwendung, die im ersten Bereich ausgeführt und angezeigt wird, so dass sie im Hintergrund ausgeführt wird, und Steuern der elektronischen Vorrichtung, so dass sie nur die wenigstens eine zweite Anwendung, die im zweiten Bereich ausgeführt wird, anzeigt.

5. Bildschirmaufteilungs-Anzeigevorrichtung, die in einer elektronischen Vorrichtung implementiert wird, die unter Verwendung eines Berührungsbildschirms betrieben wird, und Folgendes aufweist:
ein Erfassungsmodul (301), das zum Empfangen eines Betriebssignals, das das Anzeigen einer Mehrprozess-Managementschnittstelle auslöst, konfiguriert ist;
ein erstes Anzeigemodul (302), das zum Anzeigen der Mehrprozess-Managementschnittstelle konfiguriert ist, wobei die Mehrprozess-Managementschnittstelle darauf Vorschauoberflächen anzeigt, die jeweils erworbenen Anwendungen entsprechen, die auf der elektronischen Vorrichtung ausgeführt werden;
ein Verarbeitungsmodul (303), das konfiguriert ist zum, wenn erkannt wird, dass ein Benutzer eine erste Anwendung und wenigstens eine zweite Anwendung, die ausgeführt werden, aus der Mehrprozess-Managementschnittstellenanzeige auswählt, Erzeugen einer Bildschirmaufteilungs-Anzeigeschnittstelle auf Basis der ersten Anwendung und der wenigstens einen zweiten Anwendung; und
ein zweites Anzeigemodul (304), das konfiguriert ist zum Anzeigen der Bildschirmaufteilungs-Anzeigeschnittstelle, so dass die erste Anwendung und die wenigstens eine zweite Anwendung gleichzeitig ausgeführt und auf der Bildschirmaufteilungs-Anzeigeschnittstelle angezeigt werden; wobei das Verarbeitungsmodul (303) konfiguriert ist zum:
Auslösen der Erzeugung, in der Mehrprozess-Managementschnittstelle, einer Vorschauschnittstelle, die der Bildschirmaufteilungs-Anzeigeschnittstelle auf Basis der ersten Anwendung und der wenigstens einen zweiten Anwendung, wenn erkannt wird, dass der Benutzer die erste Anwendung und die wenigstens eine zweite Anwendung, die ausgeführt werden, auswählt; und wobei das Verarbeitungsmodul (303) konfiguriert ist zum:
wenn erkannt wird, dass der Benutzer die erste Anwendung und die wenigstens eine zweite Anwendung, die ausgeführt werden, auswählt, Auslösen der Erzeugung einer Vorschauoberfläche in der Mehrprozess-Managementschnittstelle, die der Bildschirmaufteilungs-Anzeigeschnittstelle entspricht, auf Basis der ersten Anwendung und der wenigstens einen zweiten Anwendung; und wobei das Verarbeitungsmodul (303) konfiguriert ist zum:
sequentiellen Stitching der Vorschauoberfläche der ersten Anwendung und der Vorschauoberfläche der wenigstens einen zweiten Anwendung zum Erzeugen der Vorschauoberfläche, die der Bildschirmaufteilungs-Anzeigeschnittstelle entspricht, so dass die Vorschauoberfläche in einen ersten Anzeigebereich und einen zweiten Anzeigebereich gemäß der Stitching-Sequenz der ersten Anwendung und der wenigstens einen zweiten Anwendung unterteilt wird, wobei der erste Anzeigebereich die Vorschauoberfläche der ersten Anwendung anzeigt und der zweite Anwendungsbereich die Vorschauoberfläche der wenigstens einen zweiten Anwendung anzeigt.

6. Vorrichtung nach Anspruch 5, wobei das zweite Anzeigemodul (304) konfiguriert ist zum:
Steuern der elektronischen Vorrichtung, so dass die Bildschirmaufteilungs-Anzeigeschnittstelle gemäß einer Seitengestaltung der Vorschauoberfläche ausgeführt und angezeigt wird, so dass die erste Anwendung in einem ersten Bereich der Bildschirmaufteilungs-Anzeigeschnittstelle ausgeführt und angezeigt wird und die wenigstens eine zweite Anwendung in einem zweiten Bereich der Bildschirmaufteilungs-Anzeigeschnittstelle ausgeführt und angezeigt wird.

7. Vorrichtung nach Anspruch 5 oder 6, wobei:
die Bildschirmaufteilungs-Anzeigeschnittstelle eine virtuelle Mehrfunktionsschaltfläche enthält, die das Anzeigen von wenigstens einem von einem Steuerelement zum Beenden der Bildschirmaufteilungsfunktion, einem Tausch-Steuerelement und einer Gruppe von Umschaltsteuerelementen veranlasst, wobei die Gruppe von Umschaltsteuerelementen ein erstes Umschaltsteuerelement zum Umschalten der ersten Anwendung, die in einem ersten Bereich in der Bildschirmaufteilungs-Anzeigeschnittstelle angezeigt wird, und ein zweites Umschaltsteuerelement zum Umschalten der wenigstens einen zweiten Anwendung, die in einem zweiten Bereich in der Bildschirmaufteilungs-Anzeigeschnittstelle angezeigt wird, enthält und
wobei die Vorrichtung ferner Folgendes aufweist:
ein erstes Steuermodul (405), das konfiguriert ist zum Steuern der Bildschirmaufteilungs-Anzeigeschnittstelle, so dass sie beendet wird, wenn das angezeigte Steuerelement zum Beenden der Bildschirmaufteilungsfunktion ausgelöst wird;
ein zweites Steuermodul (406), das konfiguriert ist zum Steuern des ersten Bereichs und des zweiten Bereichs in der Bildschirmaufteilungs-Anzeigeschnittstelle, so dass darin angezeigte Anwendungen vertauscht werden, wenn das angezeigte Tausch-Steuerelement ausgelöst wird; und/oder
ein drittes Steuermodul (407), das konfiguriert ist zum Umschalten der ersten Anwendung, die im ersten Bereich angezeigt wird, auf eine dritte Anwendung, wenn das erste Umschaltsteuerelement ausgelöst wird, und zum Umschalten der wenigstens einen zweiten Anwendung, die im zweiten Bereich angezeigt wird, auf wenigstens eine vierte Anwendung, wenn das zweite Umschaltsteuerelement ausgelöst wird.

8. Vorrichtung nach Anspruch 7, wobei das erste Steuermodul (405) Folgendes aufweist:
ein erstes Steueruntermodul (4051), das konfiguriert ist zum Steuern der elektronischen Vorrichtung, so dass sie die erste Anwendung, die im ersten Bereich ausgeführt und angezeigt wird, im Vollbildmodus anzeigt, und zum Steuern der wenigstens einen zweiten Anwendung, die im zweiten Bereich ausgeführt und angezeigt wird, so dass sie im Hintergrund ausgeführt wird; oder
ein zweites Steueruntermodul (4052), das konfiguriert ist zum Steuern der elektronischen Vorrichtung, so dass ein Desktop- oder Hauptbildschirm im Vollbildmodus angezeigt wird, und zum Steuern der ersten Anwendung und der wenigstens einen zweiten Anwendung, so dass sie im Hintergrund ausgeführt wird; oder
ein drittes Steueruntermodul (4053), das konfiguriert ist zum Steuern der ersten Anwendung, die im ersten Bereich ausgeführt und angezeigt wird, so dass sie im Hintergrund ausgeführt wird, und zum Steuern der elektronischen Vorrichtung, so dass sie nur die wenigstens eine zweite Anwendung, die im zweiten Bereich ausgeführt wird, anzeigt.

9. Computerprogramm mit Anweisungen zum Ausführen der Schritte eines Bildschirmaufteilungs-Anzeigeverfahrens nach einem der Ansprüche 1 bis 4, wenn das genannte Programm durch einen Computer ausgeführt wird.

10. Aufzeichnungsmedium, das von einem Computer gelesen werden kann und auf dem ein Computerprogramm mit Anweisungen zum Ausführen der Schritte eines Bildschirmaufteilungs-Anzeigeverfahrens nach einem der Ansprüche 1 bis 4 aufgezeichnet ist.

## Revendications

1. Procédé d'affichage sur écran divisé, mis en œuvre dans un dispositif électronique qui fonctionne en utilisant un écran tactile et comprenant :
recevoir (101, 201) un signal de fonctionnement qui déclenche l'affichage d'une interface de gestion multitâche ;
afficher (102) l'interface de gestion multitâche, où l'interface de gestion multitâche affiche dessus des interfaces de prévisualisation correspondant respectivement à des applications acquises s'exécutant sur le dispositif électronique ;
lorsqu'il est détecté qu'un utilisateur sélectionne, de l'affichage d'interface de gestion multitâche, une première application et au moins une deuxième application qui s'exécutent, générer (103) une interface d'affichage sur écran divisé sur la base de la première application et de la au moins une deuxième application ;
afficher (104) l'interface d'affichage sur écran divisé, de sorte que la première application et la au moins une deuxième application sont exécutées et affichées simultanément sur l'interface d'affichage sur écran divisé ; où générer (103) l'interface d'affichage sur écran divisé sur la base de la première application et de la au moins une deuxième application, lorsqu'il est détecté que l'utilisateur sélectionne la première application et la au moins une deuxième application qui s'exécutent, comprend :
lorsqu'il est détecté que l'utilisateur sélectionne la première application et la au moins une deuxième application qui s'exécutent, déclencher (204) la génération, dans l'interface de gestion multitâche, d'une interface de prévisualisation correspondant à l'interface d'affichage sur écran divisé sur la base de la première application et de la au moins une deuxième application ; et où déclencher (204) la génération, dans l'interface de gestion multitâche, de l'interface de prévisualisation correspondant à l'interface d'affichage sur écran divisé sur la base de la première application et de la au moins une deuxième application comprend :
joindre séquentiellement l'interface de prévisualisation de la première application et l'interface de prévisualisation de la au moins une deuxième application pour générer l'interface de prévisualisation correspondant à l'interface d'affichage sur écran divisé, de sorte que l'interface de prévisualisation est divisée en une première zone d'affichage et une deuxième zone d'affichage conformément à la séquence de jonction de la première application et de la au moins une deuxième application, où la première zone d'affichage affiche l'interface de prévisualisation de la première application et la deuxième zone d'affichage affiche l'interface de prévisualisation de la au moins une deuxième application.

2. Procédé selon l'une quelconque des revendications précédentes, dans lequel afficher (104) l'interface d'affichage sur écran divisé, de sorte que la première application et la au moins une deuxième application sont exécutées et affichées simultanément sur l'interface d'affichage sur écran divisé, comprend :
contrôler le dispositif électronique pour exécuter et afficher l'interface d'affichage sur écran divisé conformément à une mise en page de l'interface de prévisualisation, de sorte que la première application est exécutée et affichée dans une première zone de l'interface d'affichage sur écran divisé et la au moins une deuxième application est exécutée et affichée dans une deuxième zone de l'interface d'affichage sur écran divisé.

3. Procédé selon l'une quelconque des revendications 1 ou 2, dans lequel
l'interface d'affichage sur écran divisé contient un bouton virtuel multifonction qui cause l'affichage d'au moins l'un d'entre un widget de sortie de fonction d'écran divisé, un widget d'échange et un groupe de widgets de commutation, le groupe de widget de commutation comprenant un premier widget de commutation pour commuter la première application affichée dans une première zone de l'interface d'affichage sur écran divisé et un deuxième widget de commutation pour commuter la au moins une deuxième application affichée dans une deuxième zone de l'interface d'affichage sur écran divisé, et le procédé comprend en outre :
lorsque le widget de sortie de fonction d'écran divisé affiché est déclenché, contrôler l'interface d'affichage sur écran divisé à quitter ;
lorsque le widget d'échange affiché est déclenché, contrôler la première zone et la deuxième zone dans l'interface d'affichage sur écran divisé afin d'échanger les applications affichées dedans ; et/ou
commuter la première application affichée dans la première zone à une troisième application lorsque le premier widget de commutation est déclenché, et commuter la au moins une deuxième application affichée dans la deuxième zone à au moins une quatrième application lorsque le deuxième widget de commutation est déclenché.

4. Procédé selon la revendication 3, dans lequel contrôler l'interface d'affichage sur écran divisé à quitter comprend :
contrôler le dispositif électronique pour afficher en plein écran la première application exécutée et affichée dans la première zone, et contrôler la au moins une deuxième application exécutée et affichée dans la deuxième zone pour l'exécuter en arrière-plan ; ou bien
contrôler le dispositif électronique pour afficher en plein écran un écran de bureau ou d'accueil, et contrôler la première application et la au moins une deuxième application pour qu'elles s'exécutent en arrière-plan ; ou bien
contrôler la première application exécutée et affichée dans la première zone pour qu'elle s'exécute en arrière-plan, et contrôler le dispositif électronique pour n'afficher que la au moins une deuxième application exécutée dans la deuxième zone.

5. Appareil d'affichage sur écran divisé, mis en œuvre dans un dispositif électronique qui fonctionne en utilisant un écran tactile et comprenant :
un module d'acquisition (301) configuré pour recevoir un signal de fonctionnement qui déclenche l'affichage d'une interface de gestion multitâche ;
un premier module d'affichage (302) configuré pour afficher l'interface de gestion multitâche, où l'interface de gestion multitâche affiche dessus des interfaces de prévisualisation correspondant respectivement à des applications acquises s'exécutant sur le dispositif électronique ;
un module de traitement (303) configuré pour, lorsqu'il est détecté qu'un utilisateur sélectionne, de l'affichage d'interface de gestion multitâche, une première application et au moins une deuxième application qui s'exécutent, générer une interface d'affichage sur écran divisé sur la base de la première application et de la au moins une deuxième application ; et
un deuxième module d'affichage (304) configuré pour afficher l'interface d'affichage sur écran divisé, de sorte que la première application et la au moins une deuxième application sont exécutées et affichées simultanément sur l'interface d'affichage sur écran divisé ; où le module de traitement (303) est configuré pour :
lorsqu'il est détecté que l'utilisateur sélectionne la première application et la au moins une deuxième application qui s'exécutent, déclencher la génération, dans l'interface de gestion multitâche, d'une interface de prévisualisation correspondant à l'interface d'affichage sur écran divisé sur la base de la première application et de la au moins une deuxième application ; et où le module de traitement (303) est configuré pour :
joindre séquentiellement l'interface de prévisualisation de la première application et l'interface de prévisualisation de la au moins une deuxième application pour générer l'interface de prévisualisation correspondant à l'interface d'affichage sur écran divisé, de sorte que l'interface de prévisualisation est divisée en une première zone d'affichage et une deuxième zone d'affichage conformément à la séquence de jonction de la première application et de la au moins une deuxième application, où la première zone d'affichage affiche l'interface de prévisualisation de la première application et la deuxième zone d'affichage affiche l'interface de prévisualisation de la au moins une deuxième application.

6. Appareil selon la revendication 5, dans lequel le deuxième module d'affichage (304) est configuré pour :
contrôler le dispositif électronique pour exécuter et afficher l'interface d'affichage sur écran divisé conformément à une mise en page de l'interface de prévisualisation, de sorte que la première application est exécutée et affichée dans une première zone de l'interface d'affichage sur écran divisé et la au moins une deuxième application est exécutée et affichée dans une deuxième zone de l'interface d'affichage sur écran divisé.

7. Appareil selon l'une quelconque des revendications 5 ou 6, dans lequel
l'interface d'affichage sur écran divisé contient un bouton virtuel multifonction qui cause l'affichage d'au moins l'un d'entre un widget de sortie de fonction d'écran divisé, un widget d'échange et un groupe de widgets de commutation, le groupe de widget de commutation comprenant un premier widget de commutation pour commuter la première application affichée dans une première zone de l'interface d'affichage sur écran divisé et un deuxième widget de commutation pour commuter la au moins une deuxième application affichée dans une deuxième zone de l'interface d'affichage sur écran divisé, et l'appareil comprend en outre :
un premier module de contrôle (405) configuré pour, lorsque le widget de sortie de fonction d'écran divisé affiché est déclenché, contrôler l'interface d'affichage sur écran divisé à quitter ;
un deuxième module de contrôle (406) configuré pour, lorsque le widget d'échange affiché est déclenché, contrôler la première zone et la deuxième zone dans l'interface d'affichage sur écran divisé afin d'échanger les applications affichées dedans ; et/ou
un troisième module de contrôle (407) configuré pour commuter la première application affichée dans la première zone à une troisième application lorsque le premier widget de commutation est déclenché, et commuter la au moins une deuxième application affichée dans la deuxième zone à au moins une quatrième application lorsque le deuxième widget de commutation est déclenché.

8. Appareil selon la revendication 7, dans lequel le premier module de contrôle (405) comprend :
un premier sous-module de contrôle (4051) configuré pour **contrôler** le dispositif électronique pour afficher en plein écran la première application exécutée et affichée dans la première zone, et contrôler la au moins une deuxième application exécutée et affichée dans la deuxième zone pour l'exécuter en arrière-plan ; ou bien
un deuxième sous-module de contrôle (4052) configuré pour contrôler le dispositif électronique pour afficher en plein écran un écran de bureau ou d'accueil, et contrôler la première application et la au moins une deuxième application pour qu'elles s'exécutent en arrière-plan ; ou bien
un troisième sous-module de contrôle (4053) configuré pour contrôler la première application exécutée et affichée dans la première zone pour qu'elle s'exécute en arrière-plan, et contrôler le dispositif électronique pour n'afficher que la au moins une deuxième application exécutée dans la deuxième zone.

9. Programme informatique comprenant des instructions pour exécuter les étapes d'un procédé d'affichage sur écran divisé selon l'une quelconque des revendications 1 à 4 lorsque ledit programme est exécuté par un ordinateur.

10. Support de stockage lisible par un ordinateur et ayant enregistré dessus un programme informatique comprenant des instructions pour exécuter les étapes d'un procédé d'affichage sur écran divisé selon l'une quelconque des revendications 1 à 4.
